# EUROPEAN PATENT APPLICATION

(11) **EP 4 660 586 A1**
(43) Date of publication of application: **10.12.2025**
(21) Application number: 25176851.1
(22) Date of filing: 15.05.2025
(51) Int. Cl.: G01C 23/00, G08G 5/34, G08G 5/54

(54) **SYSTEM AND METHOD OF GENERATING AN ALTITUDE CONSTRAINT-COMPLIANT VERTICAL TRAJECTORY FOR A MANUAL LEG OF A FLIGHT PLAN**

(30) Priority: 07.06.2024 IN 202411044286; 24.07.2024 US 202418782786
(71) Applicant: Honeywell International Inc., Charlotte, NC 28202 (US)
(72) Inventor: CHAUBEY, Rajesh, Charlotte, 28202 (US); CORBEL, Daniel, Charlotte, 28202 (US); ADVANI, Sharanabasappa, Charlotte, 28202 (US)
(74) Representative: Ingrassia, Fisher & Lorenz UK Ltd.

(57) **Abstract**

A system and method of generating a vertical trajectory of a flight path for an aircraft includes receiving indication of a manual leg on the flight path with an entry waypoint, an exit waypoint, and a change of altitude. The method includes estimating an estimated distance along a potential lateral flight path at the manual leg depending on the change in altitude. The method includes generating the vertical trajectory along the manual leg and at least depending on the estimated distance, and determining, by at least one processor, one or more altitude constraints affecting flight path altitudes at the manual leg. Also, the method includes determining whether the vertical trajectory is flyable by comparing the vertical trajectory to the altitude constraints, and displaying, the vertical trajectory to a user only when the vertical trajectory is flyable.

## Description

### CROSS REFERENCE TO RELATED APPLICATION

This application claims priority to India Provisional Patent Application No. 202411044286, filed June 7, 2024, the entire content of which is incorporated by reference herein.

### TECHNICAL FIELD

Herein, the disclosed implementations generally relate to avionic navigation and more particularly to a method and system of generating an altitude constraint-compliant vertical trajectory for a flight plan.

### BACKGROUND

During conventional airspace navigation, an air traffic control (ATC) provides a flight path with headings and altitudes to an aircraft crew to direct the aircraft along the fight path. At certain points along a flight path, the ATC may direct an aircraft to change a present heading to a new heading via a "Fix-To-Manual (FM)" or "Heading-To-Manual (VM)" leg. The new heading is often for descent or initial approach to an airport runway. The FM or VM leg can be a manual leg (or radar vector) of a flight plan by the ATC where the aircraft pilot will need to control the aircraft manually until an exit waypoint of the manual leg on the new heading. For this manual leg, a flight management system (FMS) can be used to determine a lateral flight plan which is displayed to the aircraft crew so that the pilot or crew can control the aircraft according to the lateral flight plan. In many FMS systems, however, the FMS often generates vertical trajectories (or profiles) for the manual leg that are unflyable because the vertical trajectory does not comply with altitude constraints. Those unflyable vertical trajectories are often displayed to the pilot as well. In these cases, the pilot often wastes time viewing the unflyable vertical trajectory (also referred to as a "too steep path" during descents), and this can occur whether the pilot needs to set the FMS to recalculate a new vertical trajectory, or the FMS automatically recalculates the vertical trajectory itself. In either case, displaying the unflyable vertical trajectory of the manual leg distracts the pilot or air crew from other tasks in the cockpit and/or delays the pilot's actions for setting an acceptable, fuel efficient, flyable flight plan along the manual leg.

Hence, a need exists for a system and method that timely provides a pilot with a flyable flight plan for a manual leg and avoids the display of non-flyable flight plans.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

One example implementation of a method of generating a vertical trajectory of a flight path for an aircraft includes receiving indication that a downpath leg on the flight path is to be a manual leg with an entry waypoint, an exit waypoint, and a change of altitude between the entry and exit waypoints, and estimating, by at least one processor, an estimated distance along a potential lateral flight path at the manual leg and extending in a direction from the entry waypoint to the exit waypoint and depending on the change in altitude. The method includes generating by at least one processor, the vertical trajectory along the manual leg and at least depending on the estimated distance; determining, by at least one processor, one or more altitude constraints affecting flight path altitudes at the manual leg. Also, the method includes determining, by at least one processor, after the vertical trajectory is generated, whether the vertical trajectory is flyable by comparing the vertical trajectory to the altitude constraints, and displaying, the vertical trajectory to a user only when the vertical trajectory is flyable.

An example implementation of a system includes memory storing one or more databases of altitude constraints, at least one display in an aircraft cockpit, and processor circuitry forming at least one processor communicatively coupled to the memory and at least one display. The at least one processor is arranged to operate by: receiving indication that a downpath leg on the flight path is to be a manual leg with an entry waypoint, an exit waypoint, and a change of altitude between the entry and exit waypoints, estimating, by at least one processor, an estimated distance along a potential lateral flight path at the manual leg and extending in a direction from the entry waypoint to the exit waypoint and depending on the change in altitude, and generating, by at least one processor, the vertical trajectory along the manual leg and at least depending on the estimated distance. These operations also include determining, by at least one processor, one or more of the altitude constraints affecting flight path altitudes at the manual leg, determining after generation of the vertical trajectory, by at least one processor, whether the vertical trajectory is flyable by comparing the vertical trajectory to the altitude constraints, and displaying the vertical trajectory on the display only when the vertical trajectory is flyable.

Another example implementation includes at least one non-transitory computer-readable medium comprising instructions that when operated by a computing device, are arranged to operate by: receiving indication that a downpath leg on the flight path is to be a manual leg with an entry waypoint, an exit waypoint, and a change of altitude between the entry and exit waypoints, and estimating, by at least one processor, an estimated distance along a potential lateral flight path at the manual leg and extending in a direction from the entry waypoint to the exit waypoint and depending on the change in altitude. These operations also may include generating by at least one processor, the vertical trajectory along the manual leg and at least depending on the estimated distance, determining, by at least one processor, one or more altitude constraints affecting flight path altitudes at the manual leg, determining after generation of the vertical trajectory, by at least one processor, whether the vertical trajectory is flyable by comparing the vertical trajectory to the altitude constraints, and displaying the vertical trajectory to a user only when the vertical trajectory is flyable.

Furthermore, other desirable features and characteristics of the system and method for generating optical frequency combs as described herein will become apparent from the subsequent detailed description and the appended claims, taken in conjunction with the accompanying drawings and the preceding background.

### BRIEF DESCRIPTION OF DRAWINGS

The present disclosure will hereinafter be described in conjunction with the following drawing figures, wherein like numerals denote like elements, and wherein:
FIG. 1 is a schematic diagram of an example system for an aircraft according to at least one of the implementations herein;
FIG. 2 is a schematic diagram of an example flight management system (FMS) according to at least one of the implementations herein;
FIG. 3 is a flow chart of an example method of generating a vertical trajectory of a manual leg of a flight path;
FIG. 4 is a schematic diagram of an example lateral aircraft flight path with a manual leg according to at least one of the implementations herein;
FIG. 5 is a schematic diagram of an example lateral trajectory profile for a flight plan according to at least one of the implementations herein;
FIG. 6 is a schematic diagram of an example first alternative vertical trajectory profile for the flight plan of FIG. 5 and with altitude constraints according to at least one of the implementations herein;
FIG. 7 is a schematic diagram of an example second alternative vertical trajectory profile for the flight plan of FIG. 5 and with altitude constraints according to at least one of the implementations herein;
FIG. 8 is a schematic diagram of an example third alternative vertical trajectory profile for the flight plan of FIG. 5 and with altitude constraints according to at least one of the implementations herein;
FIG. 9 is a schematic diagram of an example fourth alternative vertical trajectory profile for the flight plan of FIG. 5 and with altitude constraints according to at least one of the implementations herein;
FIG. 10 is a schematic diagram of an example aircraft initial approach chart showing a flight path with a manual leg according to at least one of the implementations herein; and
Fig. 11 is a schematic diagram of another example aircraft initial approach chart showing a flight path with a manual leg according to at least one of the implementations herein.

### DETAILED DESCRIPTION

All of the implementations described herein are example implementations provided to enable persons skilled in the art to make or use the disclosed methods, systems, and devices and not to limit the scope of the claims. Furthermore, no intention exists to be bound by any expressed or implied theory presented in the preceding technical field, background, brief summary, or the following detailed description.

Altitude constraints used to restrict vertical trajectories for aircraft flight plans are obtained by the FMS in several different ways. As one example, coded altitude constraints are specified in file format standards published by known navigation system entities or companies and that are in a standard format for the preparation and transmission of data for assembly of airborne navigation system databases. Coded altitude constraints are stored in a navigation database accessible to an FMS and/or pilot. Otherwise, the pilot may enter altitude constraints into the FMS no matter the pilot's source for the constraints, such as weather reports. The altitude constraints are altitudes that for flight routes to better ensure that aircraft maintain (1) safe vertical separation from terrain and obstacles (minimum altitude from the ground, buildings, towers, mountains, and so forth), (2) separation from other aircraft, and (3) compliance with airspace restrictions which depends on the use of a specific area on the ground or in the air such as for temporary flight restrictions (TFRs), prohibited areas (PAs), restricted areas (RAs), special use airspace (SUA), airspace security measures, and so forth. The FMS, operated by a flight management computer (FMC) of an aircraft, often has access to aviation terrain and airspace restriction databases, while altitude constraints related to other aircraft are often provided by an ATC. An FMS on an aircraft or other location also can determine air traffic by using data from a Traffic Collision Avoidance System (TCAS) and/or automatic dependent surveillance-broadcast (ADS-B) system.

An ATC provides aircraft a heading, speed, altitude, and other parameters from waypoint to waypoint along a flight plan that can be entered into an FMS for autopilot control of an aircraft or for control by a pilot (or air crew) of an aircraft to follow the flight plan. The ATC also may maintain supervision and provide the new heading, speed, altitudes, and so forth to the crew of the aircraft for radar vectors which are transition legs from a current heading to a new heading.

In contrast, when the ATC does not provide supervision and does not provide further information on the exact radar vector that should be used, and a pilot is expected to fly a radar vector from a current heading to a new heading manually, this is referred to as a manual leg, or generally as a discontinuity, where the FMS and/or pilot determines the exact flight plan (or path) to use. Specifically, and at some points along a current heading of a flight path, particularly when approaching an initial approach fix (IAF) or final approach fix (FAF), the ATC may provide a new heading and altitude. The ATC may or may not provide a downpath waypoint on the new heading, such as an IAF or other waypoint. In some situations, the ATC eventually provides the waypoint on the new heading but it may not be provided immediately, often leaving an FMS to determine vertical trajectories of a manual leg without knowing a flight path distance to a waypoint on the new heading, which is needed to determine altitude constraints.

Also, since the specific flight plan for the waypoint for deviating (or exiting) from the current heading and extending to the new, multiple different alternative radar vectors are available where multiple possible flight paths exist to the new heading. The manual leg has an entry waypoint on the current (or old) heading) and an exit waypoint on the new heading. When the ATC provides an entry waypoint of the manual leg at, or after which, the aircraft is to deviate from the current heading, the manual leg is referred to as a fix-to-manual (FM) leg. When the ATC does not provide a specific entry waypoint to deviate from and on the current heading, then this manual leg is referred to as a heading-to-manual (VM) leg. In this case, the pilot (or FMS) will set the downpath entry waypoint (or pseudo entry waypoint) to deviate from the current heading and into the manual leg at the exit waypoint.

While the FMS or the pilot may determine the location of the exit waypoint, in many cases the ATC will eventually provide the exit waypoint location on the new heading with an altitude and other information such as a linear lateral distance (or direct-to-fix ("dir to") lateral distance) from the current aircraft position to a new heading (or manual leg exit waypoint on the new heading, such as the IAF). A more precise manual leg flight path distance is unknown at this point in time since the exact radar vector for the manual leg has not been determined yet. Thus in this situation, the pilot and FMS cannot necessarily wait for the ATC to provide a precise exit waypoint, and the FMS computes an initial lateral trajectory without knowing the exact distance to the new heading that is needed to determine a precise vertical trajectory to comply with altitude constraints. It will be understood that the altitude constraints can change depending on which radar vector or exact flight plan is selected for the manual leg despite having received the "dir to" distance from the ATC.

Once the FMS generates a vertical trajectory, even if an initial vertical trajectory, the vertical trajectory then is displayed on a vertical display (VD) or other display in the cockpit of the aircraft. Thus, this display can occur even when the vertical trajectory is unflyable. When the vertical trajectories of the manual leg are generated and displayed without altitude compliance, this causes unnecessary delays for the pilot to finalize, confirm, and execute the manual leg flight plan. Such delays distract the pilot and air crew from performing other tasks, and may eliminate beneficial flight strategies that can be used when a sufficient amount of flight planning time is available. For example, performance measurements for fuel consumption and energy reduction strategies may be used to set low energy consumption techniques including an Idle Thrust Zero Airbrake (or Speed Brake) profile during a descent at the manual leg. This technique, however, cannot be used if the crew is wasting time determining that a vertical trajectory is unflyable, and then having the FMS generate an updated, compliant, flyable vertical trajectory. By that time, it is often too late to use techniques that require relatively more time to plan and implement.

To resolve these issues, the present methods, systems, and devices disclose an on-board (or off-board) system providing a planned and strategic way of generating FM, VM, or other type of manual leg flight plans (or predictions) including flyable, vertical trajectories complying with altitude constraints for display in a cockpit and for manual execution by a pilot. It should be noted that the processes used herein are used when generating a manual leg flight plan for the pilot to control the aircraft manually during the manual leg (versus autopilot). Thus, in situations when the FMS is going to control the aircraft via autopilot anyway, the FMS will make automatic adjustments to vertical profiles to comply with altitude constraints and display of unflyable vertical trajectories do not occur or is not usually a significant concern.

The methods, systems, and devices disclosed herein include estimating a distance along a potential lateral flight path (or radar vector) extending from an entry waypoint to an end or exit waypoint of the manual leg and that has a change in altitude. The estimated distance used by the present system and methods is sufficiently accurate so that it can be used when the ATC has not provided an exact exit waypoint location on a new heading or other circumstances when the FMS would usually be generating unflyable vertical profiles for a manual leg. The vertical profile or trajectory along the manual leg is then generated depending on the estimated distance. The estimated distance can be computed by the FMS for example.

As an alternative, the pilot may be provided with the option to enter an estimated distance of the manual leg instead and based on pilot experience, for example, where a pilot may have flown the same route hundreds or thousands of times. The vertical trajectory of the manual leg flight plan then may be compared to coded and other altitude constraints, where the coded constraints are obtained by the FMS from altitude constraint databases, such as a terrain, obstacle, and air restriction databases described herein. The pilot also may input altitude constraints from various sources, such as weather websites or servers, and so forth.

Once the FMS sets a manual leg flight plan, the vertical profile may be compared to altitude constraints. When the flight is found unflyable due to non-compliance with the altitude constraints, air speed and estimated distance (or in other words an alternative radar vector) may be iterated until the manual leg flight plan is flyable. Once the manual leg flight plan, and in turn vertical trajectory or profile, is found to be flyable, then after that point, the flyable vertical profile is displayed to the pilot. The pilot can then control the aircraft manually to fly along the flyable vertical profile and flight plan.

It should be noted that while the term 'pilot' is being used while describing the disclosed methods, systems, and devices, and this is not meant to be limiting in any way. Such use of the term pilot includes any member of an air crew or may refer to the air crew collectively, and whether or not the aircraft is on the ground or in the air, or whether aboard an actual aircraft or a flight simulator, unless the context indicates otherwise. Also, the terms trajectory and profile are used interchangeably, and while generally a flight plan refers to data and values of a physical flight path herein, the terms path and plan may be used interchangeably when either term could apply.

With the arrangement, relatively immediate usability of a flyable vertical trajectory can be achieved by displaying a flyable flight plan and vertical trajectory for a manual leg, and by one form, displaying only flyable vertical profiles for the manual leg. This simplifies manual leg flight planning, and in turn, improves the efficiency of the FMS and reduces time consumption for planning the manual leg by the aircraft crew. Thus, safety is increased by reducing the pilot work load due to the reduction in manual leg planning operations or so that their attention can be directed to other cockpit tasks.

Also, the time efficiency provided by the manual leg flight planning arrangements described herein provides sufficient time for the pilot and FMS to check aircraft performance parameters considerations to increase energy efficiency. For example, the savings in time for planning a manual leg enables time to execute performance or energy consumption reduction techniques. Thus, for example, sufficient time may be available to analyze performance measurements that can be used to establish an Idle Thrust Zero Airbrake (or Speed Brake) profile or other such techniques to be maintained over the manual leg during a descent despite relatively rapid changes in altitude constraints. This significantly increases fuel efficiency over the manual leg. Other details are provided below.

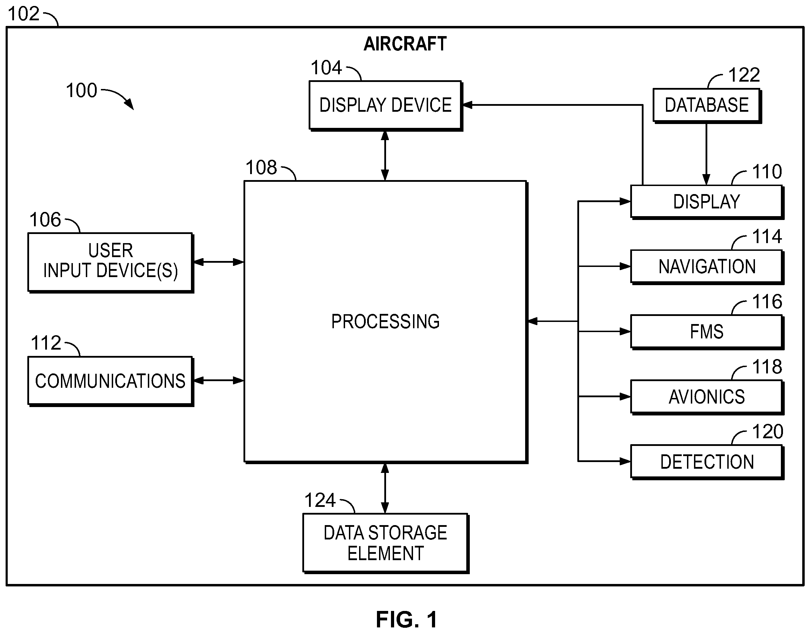

Referring now to FIG. 1, an aircraft system (or just system) 100 may be located onboard a vehicle, such as an aircraft 102. In detail, the system 100 is arranged to operate an aircraft according to one or more of the implementations described herein including manual leg flight plan generation and altitude constraint management processes and related tasks, functions and/or operations described herein. The system 100 includes, without limitation, a display device 104, a user input device 106, a processing unit or system 108, a display unit 110, a communications unit 112, a navigation system or unit 114, a flight management system (FMS) 116, one or more avionics units 118, one or more detection or sensor units 120, one or more databases 122, and one or more data storage elements 124 cooperatively arranged to support operation of the system 100, as described in detail below.

In example implementations, the display device 104 is an electronic display capable of graphically displaying flight information or other data associated with operation of the aircraft 102. The display device 104 is communicatively coupled to, and controlled by, the display unit 110 and/or processing unit 108. In this regard, the processing unit 108 and the display unit 110 are cooperatively configured to display, render, or otherwise convey one or more graphical representations or images associated with operation of the aircraft 102 on the display device 104, as described in greater detail below. In various implementations, the display device 104 may be a multifunction control display unit (MCDU), cockpit display device (CDU), primary flight display (PFD), primary engine display (PED), multi-function display (MFD), navigation display (ND) which may include a horizontal situational display, a vertical display that displays vertical trajectories or data of vertical trajectories, or any other suitable multifunction monitor or display suitable for displaying various symbols and information described herein. The display device 104 may be configured to support multi-colored or monochrome imagery, and the display device 104 may have a liquid crystal display (LCD), a light emitting diode (LED) display, an organic light emitting diode (OLED) display, a heads-up display (HUD), a heads-down display (HDD), a plasma display, a projection display, a cathode ray tube (CRT) display, or the like.

The user input device 106 is a user interface coupled to the processing unit 108, and the user input device 106 and the processing unit 108 are cooperatively configured to allow a user (e.g., a pilot, or crew member) to interact with the display device 104 and/or other elements of the aircraft system 100. Depending on the implementation, the user input device 106 may be a keypad, touchpad, keyboard, mouse, touch panel (or touchscreen), joystick, yoke, steering wheel, knob, line select key or another suitable device adapted to receive input from a user. This includes any controller or input device for controlling the motion of the aircraft in addition to any input device being used for flight path planning. In some implementations, the user input device 106 is an audio input device, such as a microphone, audio transducer, audio sensor, or the like, accompanied with audio speech recognition and other software to input commands to the FMS 116 or other system or unit on the aircraft for example. In some implementations, the user input device 106 is a tactile user input device capable of receiving free-form user input via a finger such as with touchpads or touch screens, stylus, pen, or the like.

The processing unit 108 has the hardware, circuitry, processing logic, and/or other components arranged to facilitate communications and/or interaction between the elements of the system 100 and perform additional processes, tasks and/or functions to support operation of the system 100, as described in greater detail below. Depending on the implementation, the processing unit 108 is formed by processor circuitry, and may be or have a general purpose processor, a controller, a microprocessor, a microcontroller, a content addressable memory, a digital signal processor, an application specific integrated circuit, a field programmable gate array, any suitable programmable logic device, discrete gate or transistor logic, one or more processing cores, a system on a chip (SoC), discrete hardware components, or any combination thereof, designed to perform the functions described herein. In practice, the processing unit 108 includes processing logic that may be configured to carry out the functions, techniques, and processing tasks associated with the operation of the system 100 described in greater detail below. Furthermore, the methods or algorithms described in connection with the implementations disclosed herein may be operated by using hardware, firmware, and/or software, or in any combination thereof executed by the processing unit 108. In accordance with one or more implementations, the processing unit 108 includes or otherwise accesses a data storage element, such as a memory (e.g., RAM memory, ROM memory, flash memory, registers, a hard disk, or the like) or another suitable non-transitory short or long term storage media capable of storing computer-executable programming instructions or other data for execution that, when read and executed by the processing unit 108, cause the processing unit 108 to execute and perform one or more of the processes, tasks, operations, and/or functions described herein.

The display unit 110 has the hardware, firmware, processing logic and/or other components configured to control the display and/or rendering of one or more displays pertaining to operation of the aircraft 102 and/or units or systems 112, 114, 116, 118, 120 on the display device 104 (e.g., synthetic vision displays, navigational maps, vertical profile (trajectory) displays, or vertical situation displays, and the like). Also, the display unit 110 may access or include one or more databases 122 suitably configured to support operations of the display unit 110, such as, for example, a terrain database, an obstacle database, an air restriction database, a navigational database, a geopolitical database, a terminal airspace database, a special use airspace database, or other information for rendering and/or displaying navigational maps and/or other content on the display device 104. In this regard, in addition to including a graphical representation of terrain, a navigational map displayed on the display device 104 may include graphical representations of navigational reference points (e.g., waypoints, navigational aids, distance measuring equipment (DMEs), very high frequency omnidirectional radio ranges (VORs), and the like), designated special use airspaces, obstacles, and the like overlying the terrain on the map. In one or more example implementations, the display unit 110 accesses a synthetic vision terrain database 122 that includes positional (e.g., latitude and longitude), altitudinal, and other attribute information (e.g., terrain type information, such as water, land area, or the like) for the terrain, obstacles, and other features including altitudes and altitude constraints to support rendering two-dimensional or three-dimensional perspective views of the terrain proximate the aircraft 102 for example.

In one or more example implementations, the processing unit 108 includes or otherwise accesses a data storage element 124 (or database), which maintains information regarding airports and/or other potential landing locations (or destinations) for the aircraft 102. In this regard, the data storage element 124 maintains an association between a respective airport, its geographic location, runways (and their respective orientations and/or directions), instrument procedures (e.g., approaches, arrival routes, and the like), airspace restrictions, and/or other information or attributes associated with the respective airport (e.g., widths and/or weight limits of taxi paths, the type of surface of the runways or taxi path, and the like). Additionally, in some implementations, the data storage element 124 also maintains status information for the runways and/or taxi paths at the airport indicating whether a particular runway and/or taxi path is currently operational along with directional information for the taxi paths (or portions thereof). The data storage element 124 may also be used to store or maintain other information pertaining to the airline or aircraft operator (e.g., airline or operator preferences, etc.) along with information pertaining to the pilot and/or crew of the aircraft (*e.g.*, pilot preferences, experience level, licensure or other qualifications, etc.).

Still referring to FIG. 1, in one or more example implementations, the processing unit 108 is coupled to the navigation unit 114, which may be configured to provide real-time navigational data and/or information regarding operation of the aircraft 102. The navigation unit 114 may be realized as a global positioning system (GPS), inertial reference system (IRS), or a radio-based navigation system (e.g., VHF omni-directional radio range (VOR) or long-range aid to navigation (LORAN)), and may include one or more navigational radios or other sensors suitably configured to support operation of the navigation unit 114, as will be appreciated in the art. The navigation unit 114 can obtain and/or determine the instantaneous position (location) of the aircraft 102 including the current (or instantaneous) horizontal location of the aircraft 102 (e.g., the current latitude and longitude) and the current (or instantaneous) altitude (or vertical or above ground level) for the aircraft 102. The navigation unit 114 can obtain or otherwise determine a heading of the aircraft 102 (*i.e*., the direction the aircraft 102 is traveling relative to some reference). Additionally, in one or more example implementations, the navigation unit 114 receives data from inertial reference sensors arranged to generate the attitude or orientation (e.g., the pitch, roll, and/or yaw) of the aircraft 102 relative to ground or the Earth.

In one or more example implementations, the processing unit 108 is also coupled to the FMS 116, which is coupled to the navigation unit 114, the communications unit 112, and one or more additional avionics units 118 to support navigation, flight planning, and other aircraft control functions in a conventional manner, as well as to provide real-time data and/or information regarding the operational status of the aircraft 102 to the processing unit 108. It should be noted that although FIG. 1 depicts a single avionics unit 118, in practice, the aircraft system 100 and/or aircraft 102 will likely include numerous avionics systems for obtaining and/or providing real-time flight-related information that may be displayed on the display device 104 or otherwise provided to a user (*e.g.*, a pilot). For example, practical implementations of the aircraft system 100 and/or aircraft 102 will likely include one or more of the following avionics systems or units suitably configured to support operation of the aircraft 102: a weather system, an air traffic management system, a radar system, a traffic avoidance system, an autopilot system, an autothrust system, a flight control system, hydraulics systems, pneumatics systems, environmental systems, electrical systems, engine systems, trim systems, lighting systems, crew alerting systems, electronic checklist systems, an electronic flight bag (EFB) and/or another suitable avionics system.

In the present example implementation, by one form, the detection unit 120 may have, or be communicatively coupled to, any type of sensor suitable for the aircraft that indicates a state or condition of the aircraft (including motion) and the environment around the aircraft. the detection (or sensor) unit 120 is coupled to the processing unit 108 and/or the display unit 110 and generates or otherwise provides information indicative of various objects or regions of interest within the vicinity of the aircraft 102 that are sensed, detected, or otherwise identified by a respective onboard detection unit 120. For example, an onboard detection unit 120 may have a weather radar system, thermometers, barometers, and the like, or other weather sensing system that measures, senses, or otherwise detects meteorological conditions in the vicinity of the aircraft 102 and provides corresponding radar data (e.g., radar imaging data, range setting data, angle setting data, and/or the like) to one or more of the other units 108, 110, 114, 116, 118 for further processing and/or handling. For example, the processing unit 108 and/or the display unit 110 may generate or otherwise provide graphical representations of the meteorological conditions identified by the detection unit 120 on the display device 104 (*e.g.*, on or overlying a lateral navigational map display). In another implementation, the detection unit 120 may have sensors, such as accelerometers, gyroscopes, and so forth, for determining the state of the aircraft. Otherwise the detection unit 120 may be a collision avoidance system that measures, senses, or otherwise detects air traffic, obstacles, terrain and/or the like in the vicinity of the aircraft 102 and provides corresponding detection data to one or more of the other units 108, 110, 114, 116, 118.

In one example implementation, the processing unit 108 is also coupled to the communications unit 112, which is configured to support communications to and/or from the aircraft 102 via a communications network. For example, the communications unit 112 may also include a data link system or another suitable radio communication system that supports communications between the aircraft 102 and one or more external monitoring systems, air traffic control, and/or another command center or ground location. Thus, the communications unit 112 may allow the aircraft 102 to receive information that would otherwise be unavailable to the pilot and/or co-pilot using the onboard systems/units 114, 116, 118, 120. For example, the communications unit 112 may receive meteorological information from an external weather monitoring system, such as a Doppler radar monitoring system, a convective forecast system (e.g., a collaborative convective forecast product (CCFP) or national convective weather forecast (NCWF) system), an infrared satellite system, or the like, that is capable of providing information pertaining to the type, location and/or severity of precipitation, icing, turbulence, convection, cloud cover, wind shear, wind speed, lightning, freezing levels, cyclonic activity, thunderstorms, or the like along with other weather advisories, warnings, and/or watches. The meteorological information provided by an external weather monitoring system may also include forecast meteorological data that is generated based on historical trends and/or other weather observations, and may include forecasted meteorological data for geographical areas that are beyond the range of any weather detection systems onboard the aircraft 102. In other implementations, the processing unit 108 may store or otherwise maintain historical meteorological data previously received from an external weather monitoring system, with the processing unit 108 calculating or otherwise determining forecast meteorological for geographic areas of interest to the aircraft 102 based on the stored meteorological data and the current (or most recently received) meteorological data from the external weather monitoring system. In this regard, the meteorological information from the external weather monitoring system may be operationally used to obtain a "big picture" strategic view of the current weather phenomena and trends in its changes in intensity and/or movement with respect to prospective operation of the aircraft 102.

It will be appreciated that FIG. 1 is a simplified representation of the aircraft system 100 for purposes of explanation and ease of description, and FIG. 1 is not intended to limit the application or scope of the subject matter described herein in any way. It should be appreciated that although FIG. 1 shows the display device 104, the user input device 106, and the processing unit 108 as being located onboard the aircraft 102 (e.g., in the cockpit), in practice, one or more of the display device 104, the user input device 106, and/or the processing unit 108 may be located outside the aircraft 102 (e.g., on the ground as part of an air traffic control center or another command center) and communicatively coupled to the remaining elements of the aircraft system 100 (e.g., via a data link and/or communications unit 112). Thus, by one form, the term onboard generally refers to the main tasks performed by each unit, system, or component of system 100 on the aircraft being performed onboard the aircraft, although any of these units may have tasks performed remotely via wireless communication off-board as mentioned. Thus, the on-board portion of these components, systems, or units may communicate data to other components, units, or systems onboard or provide data to the pilot, while the processing of the data such as computations or operation of algorithms may be performed remotely from the aircraft. Many variations are contemplated.

In some implementations, the units, components, or systems of system 100 may be at least partially operated from remote devices whether the device is on-board or off-board. For example, the display device 104, the user input device 106, and/or the processing unit 108 may be implemented as an electronic flight bag (EFB) that is separate from the aircraft 102 but capable of being communicatively coupled to the other elements of the aircraft system 100 when onboard the aircraft 102, and whether wirelessly or by wire. Similarly, in some implementations, the data storage element 124 may be located outside the aircraft 102 and communicatively coupled to the processing unit 108 via a data link and/or communications unit 112. Furthermore, practical implementations of the aircraft system 100 and/or aircraft 102 will include numerous other devices and components for providing additional functions and features, as will be appreciated in the art. In this regard, it will be appreciated that although FIG. 1 shows a single display device 104, in practice, additional display devices may be present onboard the aircraft 102. Additionally, it should be noted that in other implementations, features and/or functionality of processing unit 108 described herein can be implemented by or otherwise integrated with the features and/or functionality provided by the display unit 110 or the FMS 116, or vice versa. In other words, some implementations may integrate the processing unit 108 with the display unit 110 or the FMS 116. Thus, the processing unit 108 may be a component of the display unit 110 and/or the FMS 116.

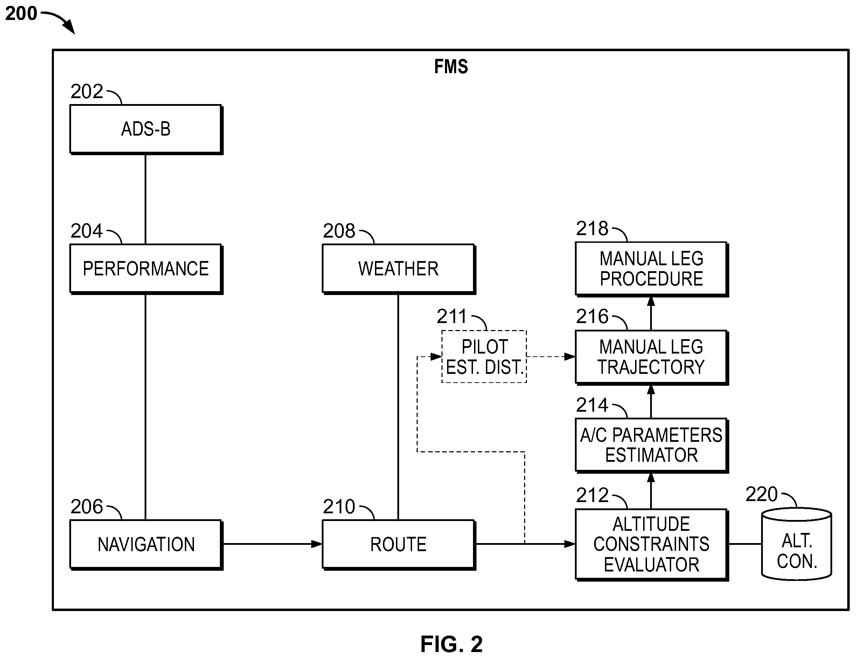

Referring to FIG. 2, an example flight management system (FMS) 200 is the same or similar to that of FMS 116 and may be operated by a flight management computer (FMC) formed by processing unit 108. As with system 100 for one example, one or more of the components, units, modules, and/or systems of FMS 116 are entirely or mainly onboard but may be entirely or partially off-board as an alternative. The FMS 116 has an ADS-B unit 202, a performance unit 204, an FMS navigation unit 206, a weather unit 208, a route unit 210, an optional pilot estimated distance unit 211, an altitude constraints evaluator unit 212, A/C parameters estimator unit 214, a manual leg trajectory unit 216, and a manual leg procedure unit 218. Other units of the system 100 may or may not be considered part of the FMS 116, such as the sensor or detection unit 120, the input user device 106, the display device 104, and the display unit 110 which are already described above with system 100.

The ADS-B unit 202 broadcasts and receives position, attitude, and direction transmitted between aircrafts, and this data may be provided to the altitude constraints unit 212 to determine air traffic constraints in addition to air traffic data, instructions, and/or altitude constraints received from the ATC or other sources.

The performance unit 204 collects sensor data and places the data in a performance database for manual leg flight plan processing, where the manual leg may be an FM or VM manual leg. The performance unit 204 may use the sensor data to convert measurements into a format or measurement units (kph for example) of performance parameters for use by the other units of the FMS 116. Such performance parameters may include aircraft state and condition (such as weight, fuel level, etc.), position (altitude and lateral location), attitude (roll, pitch, and yaw), airspeed, vertical speed, aircraft control settings such as for thrust, drag management, and so forth, fuel consumption, flight path data, and so on. The performance unit 204 can determine actual current or past aircraft performance at a point in time or flight path location, or can compute estimated performance at a downpath location on a flight plan.

The navigation unit 206 may be part of navigation unit 114, and may have or control a navigation database. The navigation database holds data related to the lateral trajectory planning and according to the file format industry standards. The navigation database may have the altitude constraints if not provided in a separate altitude constraints database.

The weather unit 208 may have current weather conditions obtained from the aircraft sensor data at sensor unit 120, wireless transmission from remote weather sources including the ATC or weather information servers, but also from the pilot or crew via FMS input pages displayed on input device 106. Such information may include wind direction and speed, precipitation, humidity, air pressure, and so forth.

The route unit 210 uses the navigation data from the navigation database or unit 206 as well as the weather data from weather unit 208 to set an initial route, which may be a linear "dir to" heading from the current heading (or current position) to a new heading, and may be computed or provided by the ATC.

As one optional approach, a pilot estimated distance unit 211 may be provided when a pilot, through substantial flight experience flying to a destination such as an airport, has predetermined estimated distances ("distance to go") that can be entered through an FMS input page on input device 106. In this case, the pilot's estimated distance is used to generate the lateral and/or vertical trajectories of the manual leg rather than having the FMS 200 compute an estimated distance to adjust the manual leg trajectories for altitude constraint compliance.

When no pilot estimated distance is provided, or when an alternative manual leg trajectory is to be computed anyway, the altitude constraints evaluator unit 212 determines which altitude constraints will apply to the current route (or lateral trajectory if already computed). The altitude constraints evaluator unit 212 may have an altitude constraints database 220 that has a terrain database, an obstacle database, an air restriction database, a navigational database, a geopolitical database, a terminal airspace database, a special use airspace database, and so forth if not already provided and accessible from system 100 database 122 or from a navigation database controlled by the navigation unit 206.

The A/C parameters estimator unit 214 obtains parameters (aircraft weight, airspeed, etc.), determines a speed management mode, computes flight path angles (FPAs), and generates estimated distances (distance to go) along a specific flight path or radar vector, and any other parameters needed to set the manual leg trajectories. As an alternative, each of these operations may have its own unit or module as part of the estimator unit 214 or FMS 200.

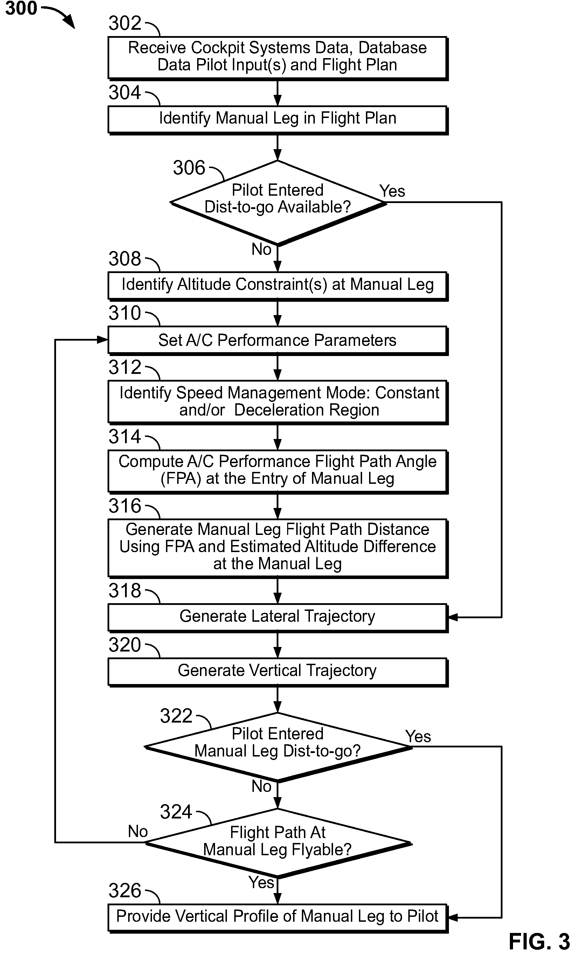

The manual leg trajectory unit 216 then generates data of the manual leg lateral and vertical trajectories, compares the manual leg trajectories to the altitude constraints, and uses iterations of the trajectories until the trajectories comply with the altitude constraints as explained in detail below. As an alternative, each of these operations may have its own unit or module as part of the manual leg trajectory unit 216 or FMS 200. The manual leg procedure unit 218 then generates instructions to execute a resulting manual leg flight plan with the altitude constraint compliant vertical trajectory. The display unit 110 then may display the approved vertical trajectory as well as the instructions (or procedure) and other data for the corresponding manual leg flight plan to the pilot in a cockpit or other location as described above. More details of the operation of system 100 and FMS 200 are provided with the description of process 300 (FIG. 3).

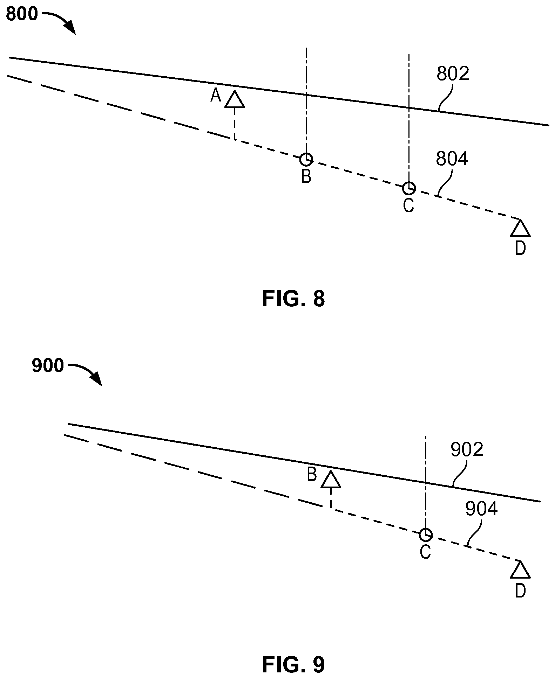

Referring to FIG. 3, a process 300 for generating a vertical trajectory of a manual leg of a flight plan according to at least one of the implementations herein has operations 302 to 326, generally numbered evenly. The process 300 may refer to any of the systems, devices, flight plans or paths described in FIGS. 1-2 and 4-11, where relevant.

Process 300 may include "receive cockpit systems data, database data, pilot input(s), and flight plan" 302, and as already described above that is available for the FMS at a time where a current flight plan has already been received (or generated by the FMS) and includes data of a current position of the aircraft and a current heading. The data is received by, and/or generated by, an FMS, such as FMS 116 or 200, which may be on-board, on an EFB, or other computing device as described above.

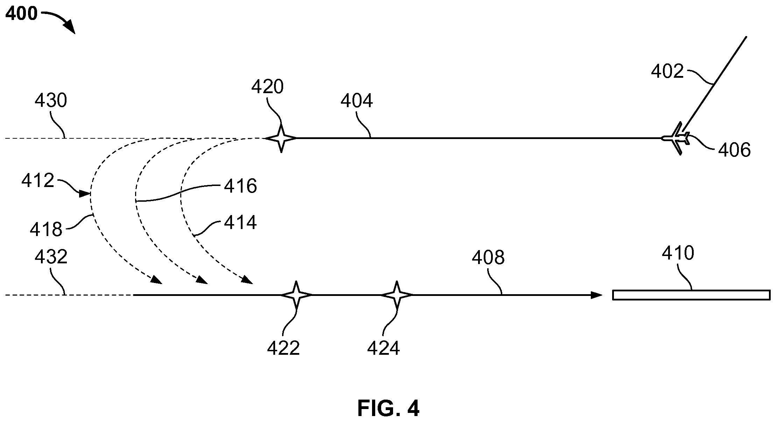

Referring to FIG. 4, process 300 may include "identify manual leg in flight plan" 304. For example, a flight plan 400 has a completed flight path or leg 402 flown by an aircraft 406 shown at a current position and flying along a current heading 430 and before a preplanned upcoming or downpath leg or section 404 along the current heading 430. The flight plan 400 may be flown by automatic pilot at least up to the current aircraft position and may be referred to as a lateral mode (where altitude may not be changing). The ATC then provides a new heading 432 and altitude, and may or may not provide an exit waypoint 422 that may be an IAF waypoint while a waypoint 424 on the new heading may be an FAF waypoint before a runway 410 on the ground. The following are example alternative ATC manual leg instructions:
(1) Basic vector instruction contains heading only: "KLM465, turn right heading 360".
(2) Combined vector instruction with descent instruction: "KLM465, turn right heading 360, descent 2000ft".
(3) Combined vector instruction with descent instruction and speed reduction: "KLM465, turn right heading 360, descent 2000ft, reduce 200 knots"
(4) Combined vector instruction with final approach clearance: "KLM465, turn right heading 360, descent 2000ft, cleared ILS approach runway 03".

Such flight plans on descent include vectored continuous descent operations (CDOs). By one form, the pilot may enter the heading and waypoints when provided into the FMS so that the route to the new heading 432 is generated by the route unit 210. The ATC also may provide a direct to ("dir to") distance or "distance-to-go" from the current aircraft position 406 and to the exit waypoint 422 at the new heading 432 but does not provide the exact lateral and vertical profiles for a flight plan from the current to the new heading, thereby establishing a flight plan discontinuity, or in other words, a manual leg 412.

A group of possible alternative manual leg flight paths or radar vectors represent the manual leg 412 and here are shown as radar vectors or flight plans (or paths) 414, 416, and 418, between the current and new headings 430 and 432. If provided by the ATC, the waypoint 422 becomes the exit or end waypoint of the manual leg 412. If the ATC provides an entry waypoint 420 of the manual leg on the current heading, then the manual leg is an FM manual leg, but if no entry waypoint is provided, then the ATC establishes a VM manual leg. In the latter case, the pilot or FMS will establish the entry waypoint 420 as a manual pseudo waypoint that indicates the flight plan discontinuity and start (or entry) of the manual leg. In either case, the pilot is to control the aircraft along the manual leg rather than the FMS or autopilot. Without pilot interaction, the aircraft 406 would stay on the current heading. The FMS, however, is still used to generate a manual leg flight plan for the pilot to control the aircraft along the manual leg flight plan.

Process 300 may include the inquiry "pilot entered dist-to-go available?" 306. Thus, the FMS 116 or 200 provides navigation display (ND) interactivity for the pilot and crew to graphically enter the manual leg (or FM/VM) ATC assigned distance to go. Otherwise, the pilot may enter a more precise distance-to-go for a specific radar vector that is to be the lateral trajectory of the manual leg and based on experience of the pilot. A pilot may have flown to a particular destination with the same general flight plans hundreds, if not thousands of times, and may have a sufficiently accurate estimated distance along a manual leg flight plan usually used by the pilot and to the exit waypoint 422 on the new heading 432. In this case, generation of an estimated distance of the manual leg as well as comparisons of the altitude constraints to a vertical trajectory is omitted or skipped. In this case, the process proceeds directly to generation of the manual leg trajectories at operation 318 and 320.

For now, it will be assumed that the pilot does not have the manual leg estimated distance. This may be due to the lack of experience of the pilot with the current location (or airport), but also may be due to too much variation in conditions from the usual conditions that established a previously known estimated distance of the manual leg. This could be caused by weather, the state or position of the aircraft, and many other causes. In these cases, process 300 continues with "identify altitude constraint(s) at manual leg" 308. Here, the altitude constraints evaluator unit 212 may use the altitude constraints database 220 to determine the altitude constrains that may be applied to a lateral trajectory through a general area where the manual leg 412 is to be established. As mentioned, such constraints may be due to a relative position of other aircraft, airspace restrictions, terrain, obstacles, and so forth, and by one example form, that is other than an altitude provided at the exit waypoint 422 (or downpath from the exit waypoint on the new heading) of the manual leg and already established by the ATC.

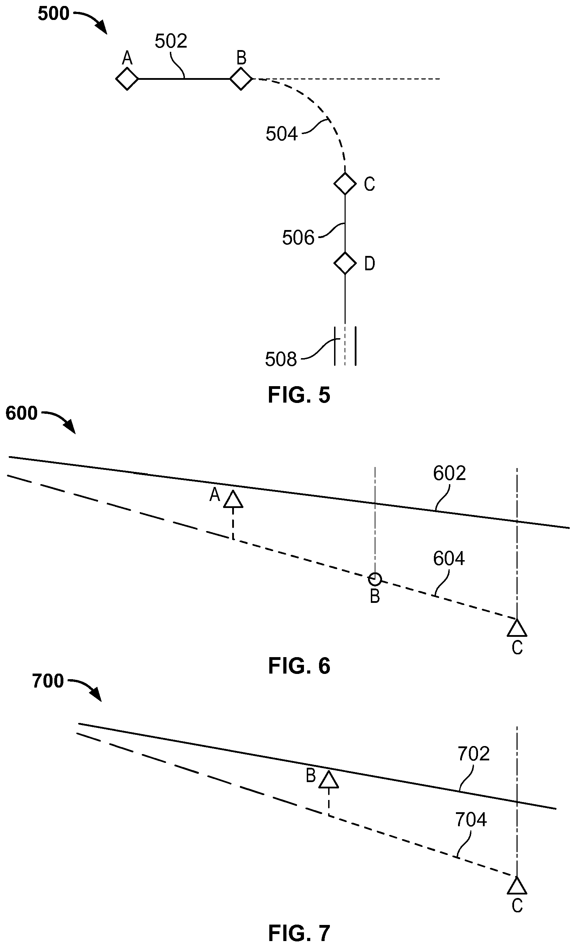

Referring to FIGS. 5-9, the altitude constraints may be established at a waypoint or any point along the lateral trajectory of the manual leg. The altitude constraints evaluator unit 212 may determine altitude constraints at waypoints or other points up-path or downpath from the manual leg but that indirectly causes an altitude constraint on the manual leg anyway. For some examples, an example lateral trajectory 500 may have example alternative vertical trajectories 600, 700, 800, and 900. The lateral trajectory or profile 500 has a first or up-path leg 502 between waypoints A and B. Waypoint B is an entry waypoint of a manual leg 504 shown in dash line and with an exit waypoint C. A downpath leg 506 is between waypoints C and D, while the path or lateral trajectory 500 continues to a runway 508. The lateral trajectory 500 assumes a dir-to-fix construction.

The alternative vertical trajectories 600, 700, 800, and 900 along lateral trajectory 500 are for descent (from left to right on the figures) and each have altitude constraints shown as a triangle where the top corner of the triangle is a minimum altitude at a particular waypoint location. The vertical trajectory 600 set for the manual leg (shown in small dashes) between waypoints B and C shows an initial non-compliant flight plan 604 that has a "too steep" flight plan that violates an altitude constraint (ALT CSTR) at waypoint A by flying below the altitude constraint at waypoint A. Thus, the flight plan 604 is in non-compliance with the altitude constraints even though no direct altitude constraint is provided at entry and exit waypoints B and C. A flight plan 602 is provided that does comply with the altitude constraint at waypoint A and the resulting altitudes at waypoints B and C are higher compared to that on the non-compliant trajectory 604. Thus, it can be stated that the manual leg complies with indirect altitude constraints on vertical trajectory 602.

In contrast, flight plan 700 shows an altitude constraint at entry and exit waypoints B and C where an initial flight path 704 was too steep, and a final flight plan 702 complies with altitude constraint at entry waypoint B which forces the altitude of the vertical trajectory at exit waypoint C to be higher than that on the non-compliant vertical trajectory 704.

Flight plan 800 shows another case of indirect altitude constraints at entry and exit waypoints B and C where the actual or direct altitude constraints are at waypoints A and D, respectively before and after the manual leg. The initial non-compliant flight path 804 is replaced with the compliant flight path 802. By yet another example, flight plan 900 has an altitude constraint at manual leg entry waypoint B but none at exit waypoint C, where an initial flight path 904 is non-compliant while final flight path 902 complies by extending over the altitude constraint at waypoint B. This raises the altitude of vertical trajectory 902 at exit waypoint C. Many other examples are possible.

Process 300 next may include "set A/C performance parameters" 310, and this may be the first operation of the A/C parameter estimator unit 214 to obtain or compute the parameters to be used to generate an estimated distance of the manual leg, and then to determine the vertical trajectory. The performance parameters may be determined for the entry and exit waypoints of the manual leg. Such performance parameters include the loaded weight of the aircraft, airspeed, and so forth.

Process 300 may include "identify speed management mode: constant and/or deceleration region" 312, and this is used to determine a flight path angle. Particularly, the process includes identifying speed management between at least deceleration and/or constant speed over the manual leg. When decelerating, the flight path angle will be shallower. When maintaining a constant speed, the flight path angle will be steeper. This will also determine flight control settings such as flap extensions, slat extensions, etc. to place the aircraft in a dive while decelerating for example. These may raise speed constraint issues not dealt with herein.

Process 300 may include "compute A/C performance flight path angle (FPA) at entry of manual leg" 314. Particularly, a performance parameter flight path angle (FPA) may be computed as well as a FPA ground reference. By one form, an altitude strategy may be used for several different purposes, including energy reduction. Thus, by the example form here, an idle power zero airbrake (or speed brake) may be used since the present process provides sufficient time to analyze performance parameters to generate the vertical trajectory for the idle power zero airbrake. The idle thrust zero airbrake profile can be maintained over the manual leg (or FM/VM) procedure (whether in whole or in a portion, such as half speed brakes of maximum drag). Performance parameters to be obtained for the idle thrust zero airbrake for fuel estimation calculations also may be used for setting the vertical profile, such as the estimated distance to go and time at destination. Otherwise, parameters that should be obtained include thrust settings, pitch attitude, airspeed, drag management, descent rate, and vertical speed from a vertical speed indicator (VSI) for example and from the FMS. The present method makes it easier to maintain the idle thrust zero airbrake while complying with altitude constraints despite relatively rapid changes in conditions and parameters.

Once such a descent strategy is determined, an initial FPA at the entry waypoint may be generated by using the expected altitude of the entry waypoint and the target altitude of the exit waypoint, and any other restrictions from the descent strategy (here the speed brake) being used.

Process 300 may include "generate manual leg flight path distance using FPA and estimated altitude difference at the manual leg" 316. Thus, since the change in altitude from the entry waypoint to the exit waypoint is known, and the FPA (or FPA ground reference) is now computed, the estimated distance of the manual leg from the entry to exit waypoints can be computed.

Process 300 may include "generate lateral trajectory" 318. Where the FMS uses the data described above to generate a lateral trajectory from an entry waypoint to an exit waypoint of the manual leg. The FMS may select a downpath point on the current heading as an entry waypoint if not selected already. A model is then used by the FMS to compute the lateral trajectory. The model may use the estimated distance computed by the FMS or provided by the pilot if received by the FMS.

Process 300 may include "generate vertical trajectory" 320. Once the distance of the manual leg is known on the lateral trajectory, the altitudes of the vertical trajectory can be interpolated from the exit waypoint (or new heading) altitude and along the manual leg (or in other words, estimated based on a given lateral trajectory). Applicable altitude constraints that are known can be applied to adjust the altitudes along the vertical trajectory or profile. Once the vertical profile is established, the method generates lateral and vertical profile procedures (or in other words, instructions for flying the manual leg along the profiles).

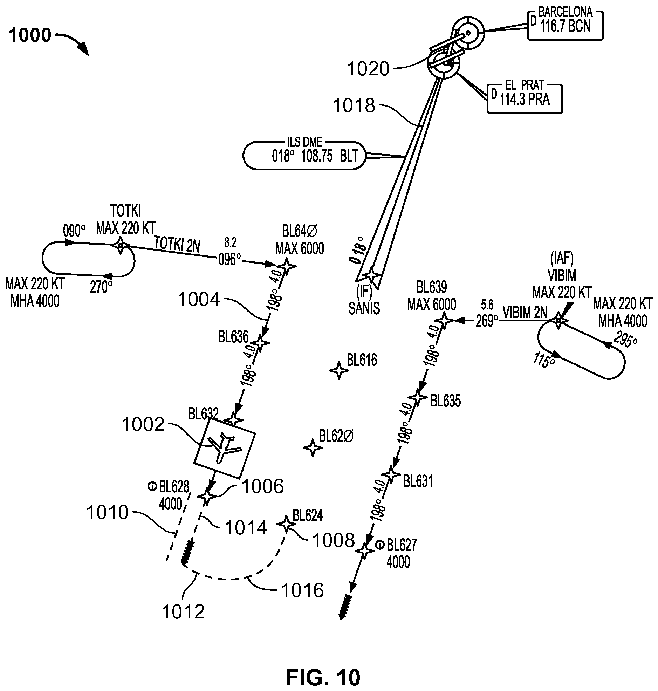

Referring to FIG. 10, an example approach flight plan chart 1000 for an airport 1020, here at Barcelona for example, has an aircraft 1002 on a flight plan 1004. The instructions from the ATC may have been continue to "Direct to BL624". A manual leg 1012 extends from an entry waypoint BL628 (1006) to an exit waypoint BL624 (1008) that is on a new heading 1018 of an instrument landing system (ILS) of the airport 1020. When the pilot is entering a manual leg estimated distance (or distance-to-go) in a navigation display or FMS page for the manual leg 1012, the pilot may be prompted to enter (or a field on the display is provided for) a track 1010 to maintain along the current heading of the flight plan 1004 before deviating from the current heading. Also, the pilot may be prompted to enter (or a field on the display is provided for) a total distance to go for the manual leg that includes both a track part 1014 along the current heading and a deviation or curved or turn part 1016. The FMS will construct the lateral trajectory with the curved segments using the pilot inputs and to form the FMS vertical profile. The pilot will then control the aircraft along the manual leg flight plan 1012 and vertical trajectory thereon.

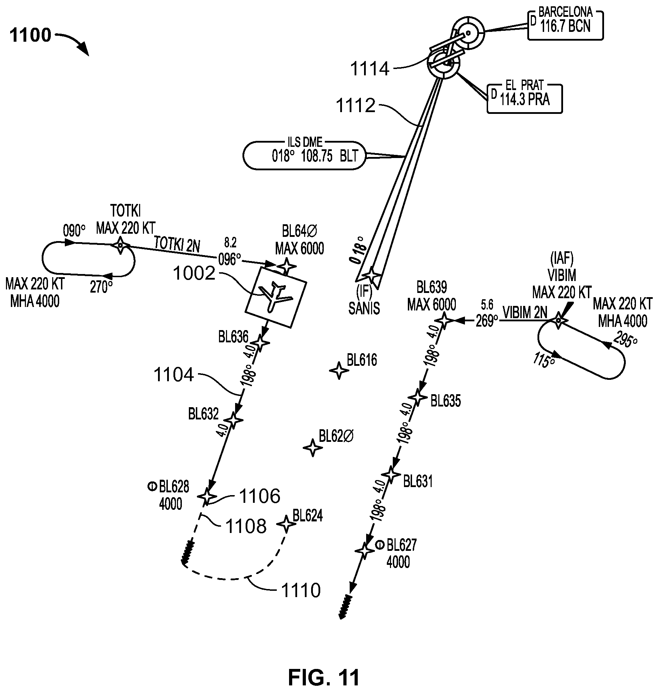

Referring to FIG. 11, when the pilot is relying on the FMS to compute the estimated distance (distance-to-go), an approach flight plan 1104 is shown with an aircraft 1102 on a current heading, and a manual leg flight plan 1106 from an entry waypoint BL628 to an exit waypoint BL624 on a new heading of an ILS 1112 for an airport 1114. The manual leg flight plan 1106 has a straight or track part 1108 on the current heading and turn part 1110 from an end of the track part 1108 to the exit waypoint BL624. Once the altitude constraints are identified as explained above, and the estimate A/C performance parameters are set, and by the present example for a descent strategy such as for idle thrust zero airbrake flight path angle (FPA) computation, the Distance-to-Go can be generated also as explained above. The results will be a procedure for the pilot to follow a track distance from the entry waypoint BL628 before the pilot should execute the turn to the exit waypoint BL624.

It will be understood that while the present examples are directed to generating the vertical trajectory or profile while in flight (or during flight simulation), the present methods can be used to generate the vertical trajectory or profile before the flight, while the aircraft is still on the ground before takeoff for example, when the ATC and/or flight plan indicates the FM/VM or other type of manual leg. This may include performing one or more of the operations mentioned above or all of them that can be performed ahead of time (before takeoff).

Process 300 may include the inquiry "pilot entered manual leg dist-to-go?" 322. If yes, then the process 300 skips to operation 326 to display the vertical trajectory to the pilot. If no, then process 300 tests the vertical trajectory for compliance with the altitude constraints.

Thus, if no, process 300 may include the inquiry "flight path at manual leg flyable?" 324. Here, the vertical trajectory of the flight path is compared to the altitude constraints of the manual leg. If the flight path does not comply with all of the altitude constraints, then the process loops back to operation 310 to adjust the parameters of the vertical profile and re-compute a revised vertical trajectory as a next iteration.

By one example approach, the vertical profile is refined in iterations by adjusting the airspeed and estimated distance to find a complying vertical profile. By one form, the speed and distance are modified in alternating iterations. By another form, both parameters are adjusted at each iteration. By yet another alternative form, one of the parameters is adjusted until some maximum interval value of that parameter is reached over a number of iterations, and then the other parameter is adjusted in the same manner. Many variations are contemplated.

Otherwise, if the vertical trajectory is flyable, process 300 may include "provide vertical profile of manual leg to pilot" 326. Here, the estimated manual leg (or FM/VM ) distance or ATC assigned distance (in other words, something that can be used) is provided for display on any type of available display such as a vertical situation display (VD) or any other display mentioned herein. As mentioned this includes displays in the cockpit, or otherwise on personal electronic devices (phones, tablets, etc.) carried onto the aircraft. This also may include computers, servers, and so forth on a flight simulator. The display may show a graph or image representing the vertical profile or may just show data related to the profile or any combination of both. Thereafter, the pilot controls the aircraft to fly along the flyable flight plan for the manual leg. By one form, the present methods and systems are not used when the aircraft FMS or autopilot is to fly a flight plan leg (and is therefore not a manual leg).

It will be appreciated that the various illustrative logical blocks, modules, units, circuits, and algorithms described in connection with the implementations disclosed herein may be implemented as electronic hardware, computer software, or combinations of both. Some of the implementations and implementations are described above in terms of functional and/or logical block components (or modules or units) and various processing operations. However, it should be appreciated that such block components (or modules or units) may be realized by any number of hardware, software, and/or firmware components configured to perform the specified functions. To clearly illustrate this interchangeability of hardware and software, various illustrative components, blocks, units, modules, circuits, and operations have been described above generally in terms of their functionality. Whether such functionality is implemented as hardware, firmware, software, or a combination of these depends upon the particular application and design constraints imposed on the overall system. Skilled artisans may implement the described functionality in varying ways for each particular application, but such implementation decisions should not be interpreted as causing a departure from the scope of the present implementations. For example, an implementation of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that implementations described herein are merely examples.

The various illustrative logical blocks, modules, units, and circuits described in connection with the implementations disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The operations of a method or algorithm described in connection with the implementations disclosed herein may be embodied directly in hardware, firmware, in a software module executed by a processor, or in a combination of the these. A software module may reside in RAM memory, flash memory, ROM memory, EPROM memory, EEPROM memory, registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical units components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an implementation of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium", "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units, also referred to as modules, described in this specification have an implementation independence. For example, functionality referred to herein as a module or unit may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the disclosure as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

As used herein, the term "substantially" denotes within 5% to account for manufacturing tolerances. Also, as used herein, the term "about" denotes within 5% to account for manufacturing tolerances.

While at least one example implementation has been presented in the foregoing detailed description of the implementations, it should be appreciated that a vast number of variations exist. It should also be appreciated that the example implementation or example implementations are only examples, and are not intended to limit the scope, applicability, or configuration of the disclosures in any way. Rather, the foregoing detailed description will provide those skilled in the art with a convenient road map for implementing an example implementation. It being understood that various changes may be made in the function and arrangement of elements described in an example without departing from the scope of the implementations as set forth in the appended claims.

## Claims

1. A method of generating a vertical trajectory of a flight path for an aircraft, comprising:
receiving indication that a downpath leg on the flight path is to be a manual leg with an entry waypoint, an exit waypoint, and a change of altitude between the entry and exit waypoints;
estimating, by at least one processor, an estimated distance along a potential lateral flight path at the manual leg and extending in a direction from the entry waypoint to the exit waypoint and depending on the change in altitude;
generating by at least one processor, the vertical trajectory along the manual leg and at least depending on the estimated distance;
determining, by at least one processor, one or more altitude constraints affecting flight path altitudes at the manual leg;
determining, by at least one processor, after the vertical trajectory is generated, whether the vertical trajectory is flyable by comparing the vertical trajectory to the altitude constraints; and
displaying, the vertical trajectory to a user only when the vertical trajectory is flyable.

2. The method of claim 1, wherein the vertical trajectory depends on a planned speed of the aircraft at the manual leg, and wherein both the planned speed and estimated distance are iterated until a flyable vertical trajectory is generated.

3. The method of claim 1 or 2, wherein a planned speed of the aircraft is used to determine a flight path angle (FPA) and is at an idle thrust zero airbrake.

4. The method of any one of claim 1 to 3, comprising determining whether an altitude constraint exists on at least one of: the entry waypoint, the exit waypoint, a point between the entry and exit waypoints, or a point before or after the manual leg along the potential lateral flight path, and wherein the altitude constraint directly or indirectly limits the altitude of the vertical trajectory at any one or more of the entry waypoint, the exit waypoint, or a point between the entry and exit waypoints of the manual leg, and wherein the altitude constraint is other than one at the exit waypoint or a point downpath from the exit waypoint and that is set by an air traffic control.

5. The method of any one of claims 1 to 4, wherein the estimated distance depends on a flight path angle (FPA) and the change in altitude from the entry to the exit of the manual leg.

6. The method of any one of claims 1 to 4, comprising omitting the determining of the estimated distance when a user inputs an estimated distance into the at least one processor.

7. The method of any one of claims 1 to 6, wherein the altitude constraints relate to at least one of: a relative position of other aircraft, airspace restrictions, obstacles, and terrain other than one at the exit waypoint or a point downpath from the exit waypoint and that is set by an air traffic control.

8. A system, comprising:
memory storing one or more databases of altitude constraints;
at least one display in an aircraft cockpit; and
processor circuitry forming at least one processor communicatively coupled to the memory and at least one display, the at least one processor being arranged to operate by;
receiving indication that a downpath leg on the flight path is to be a manual leg with an entry waypoint, an exit waypoint, and a change of altitude between the entry and exit waypoints,
estimating, by at least one processor, an estimated distance along a potential lateral flight path at the manual leg and extending in a direction from the entry waypoint to the exit waypoint and depending on the change in altitude,
generating, by at least one processor, the vertical trajectory along the manual leg and at least depending on the estimated distance,
determining, by at least one processor, one or more of the altitude constraints affecting flight path altitudes at the manual leg,
determining after generation of the vertical trajectory, by at least one processor, whether the vertical trajectory is flyable by comparing the vertical trajectory to the altitude constraints, and
displaying the vertical trajectory on the display only when the vertical trajectory is flyable.

9. The system of claim 8, wherein the vertical trajectory depends on a planned speed of the aircraft at the manual leg, and wherein both the planned speed and estimated distance are iterated until a flyable vertical trajectory is generated.

10. The system of claim 8 or 9, wherein a planned speed of the aircraft is used to determine a flight path angle (FPA) and is at an idle thrust zero airbrake.

11. The system of any one of claims 8 to 10, wherein the estimated distance depends on a flight path angle (FPA) and the change in altitude from the entry to the exit of the manual leg.

12. The system of any one of claims 8 to 10, comprising omitting the determination of the estimated distance when a user inputs an estimated distance of a potential lateral flight path of the manual leg into the at least one processor.

13. The system of any one of claims 8 to 12, wherein the altitude constraints relate to at least one of: a relative position of other aircraft, airspace restrictions, obstacles, and terrain other than one at the exit waypoint or a point downpath from the exit waypoint and that is set by an air traffic control.

14. The system of any one of claims 8 to 13, comprising at least one motion control input device in the aircraft cockpit, and wherein the at least one processor is arranged to operate by receiving manual control commands from the input device to control the motion of the aircraft along the vertical trajectory after displaying the vertical trajectory.
